# EUROPÄISCHE PATENTSCHRIFT

(11) **EP 1 313 671 B1**
(45) Veröffentlichungstag und Bekanntmachung des Hinweises auf die Patenterteilung: **23.03.2005**
(21) Anmeldenummer: 01956551.4
(22) Anmeldetag: 26.07.2001
(51) Int. Cl.: C03B 5/185, C03B 5/193

(54) **VERFAHREN ZUM ERZEUGEN EINER HOMOGENISIERTEN GLASSCHMELZE**
PROCESS FOR PRODUCING A HOMOGENEOUS GLAS MELT
PROCEDE DE PRODUCTION D'UN VERRE FONDU HOMOGENISE

(30) Priorität: 25.08.2000 DE 10041759
(43) Veröffentlichungstag der Anmeldung: 28.05.2003
(73) Patentinhaber: SCHOTT AG, 55122 Mainz (DE)
(72) Erfinder: RODEK, Erich, 55126 Mainz (DE); SCHMIDBAUER, Wolfgang, 55126 Mainz (DE); RÖMER, Hildegard, 61184 Karben (DE)
(74) Vertreter: Dr. Weitzel & Partner
(86) Internationale Anmeldenummer: PCT/EP2001/008452
(87) Internationale Veröffentlichungsnummer: WO 2002/016273

(56) Entgegenhaltungen:
- EP-A- 1 078 890
- WO-A-92/15531
- DE-A- 2 056 445
- DE-C- 3 316 546
- US-A- 2 198 304
- "CHEMICAL ABSTRACTS + INDEXES, AMERICAN CHEMICAL SOCIETY. COLUMBUS, US" CHEMICAL ABSTRACTS + INDEXES, AMERICAN CHEMICAL SOCIETY. COLUMBUS, US, XP000250356 ISSN: 0009-2258

## Beschreibung

Die Erfindung betrifft ein Verfahren zum Erzeugen einer homogenisierten Glasschmelze.

Der klassische Prozeß zum Herstellen von Glasschmelzen enthält als wichtigste Stationen eine Einrichtung zum Erschmelzen von Glasscherben oder Gemenge, eine nachgeschaltete Einrichtung zum Läutern der Schmelze sowie schließlich eine Einrichtung zum Homogenisieren der geläuterten Schmelze. Nur beispielsweise wird verwiesen auf DE 20 33 074 A, DE 33 16 546 C1, EP 0 119 877 B1.

Das Homogenisieren von Glasschmelzen erfolgt in einem Behälter, in dem ein Rührer umläuft. Durch den Rührvorgang soll die Schmelze homogenisiert werden. Es sollen aber auch Schlieren aufgelöst werden.

WO 9615071 A beschreibt die Homogenisierung von Glasschmelzen mittels eines Rührers in einem Zufuhrkanal. Dabei wird die Schmelze dadurch homogenisiert, daß die Richtung des Schmelzenstromes in der Rührzone ständig geändert wird.

DD-298767 A beschreibt eine Rührvorrichtung mit einem Rührer, der in ein zylindrisches Mischgefäß eintaucht. Der Rührer ist in zwei Rührarme unterteilt. Der Eintauchpunkt der beiden Rührarme in die Schmelze liegt dabei außerhalb der Symmetrieachse des Mischgefäßes.

SU-914510 B beschreibt eine Rühreinrichtung mit einem Rührer, der ein kegelstumpfförmiges Ende aufweist. Der kegelige Kern des Rührers trägt zwei Flügel, die der Glasschmelze eine Aufwärtsströmung verleihen. Dies soll zu einem guten Durchmischen von Oberflächenschichten führen.

DE 199 35 686 A beschreibt eine Homogenisiereinrichtung mit einem Rührbehälter und einem Rührer. Der Rührer hat eine besondere Außenkontur, durch welche erreicht werden soll, daß die Schmelze beim Verlassen der Rührzone schlierenfrei ist.

Die bekannten Homogenisiereinrichtungen mit den genannten Rührbehältem und den zugeordneten Rührem weisen zahlreiche Probleme auf. Die Probleme sind zum einen mechanischer Natur. Der Rührer unterliegt in jedem Falle einer starken mechanischen Beanspruchung, so daß hohe Anforderungen an die Festigkeit des Rührers gestellt werden müssen. Rührer sind in der Herstellung aufwendig und daher verhältnismäßig teuer. Dies gilt insbesondere dann, wenn ein Rührer mit Rührflügeln versehen ist, was meist der Fall ist.

Glasschmelzen enthalten häufig chemisch aggressive Bestandteile, so daß der Rührer mehr oder minder stärk der Korrosion ausgesetzt ist. Entsprechende Materialien sind teuer. Auch die Umkleidung eines Rührkems mit Edelmetallen ist aufwendig und daher ebenfalls teuer.

Auch aus der Sicht des Prozeßergebnisses, nämlich im Hinblick auf ein gutes Homogenisieren der Schmelze, wurde bisher noch keine perfekte Lösung gefunden.

Der Erfindung liegt die Aufgabe zugrunde, ein Verfahren zum Erzeugen einer homogenisierten Glasschmelze derart zu gestalten, daß die genannten, mit dem klassischen Rührer verbundenen Probleme vermieden werden, und daß der Homogenisierprozeß gleichzeitig verbessert wird.

Diese Aufgabe wird durch die Merkmale von Anspruch 1 gelöst.

Durch das erfindungsgemäße Anwenden eines Behälters, der nach dem Skull-Prinzip aufgebaut ist, sowie einer zugeordneten Hochfrequenz-Spule zum Einkoppeln elektrischer Energie in den Behälterinhalt werden Rührer oder sonstige bewegte Bauteile überflüssig. Entsprechend diesem bekannten Prinzip wird der Behälter nach Art eines Skull-Tiegels gestaltet. Er kann zylindrisch sein. Seine Wandung ist aus einem Kranz von Metallrohren aufgebaut, im allgemeinen aus Kupferrohren. Zwischen einander benachbarten Rohren verbleiben Schlitze. Die Rohre sind von einer Hochfrequenzspule umgeben.

Bezüglich des Skull-Prinzips wird auf DE 33 16 546 C1 verwiesen. Statt der Wandung aus Metallrohren kann auch keramisches Material verwendet werden. Auch muß es sich nicht um einen stehenden Behälter handeln. Vielmehr kann der Behälter aus einer Mehrzahl von Rohren aufgebaut sein, die U-förmig sind und nebeneinander liegen, so daß sie eine nach oben offene, käfigartige Skull-Rinne bilden, die wiederum von einer Hochfrequenzspule umgeben ist. Siehe EP 0 528 025 B1.

In einem Hochfrequenz beheizten Skull-Tiegel herrschen aufgrund der hohen Temperaturgradienten zwischen der kalten Wandung und dem heißen Schmelzkem sehr hohe Konvektionsströmungen. Man kann zudem die Temperaturen nahezu beliebig hoch einstellen und damit sehr niedrige Viskositäten erreichen. Mit diesem System ist somit eine sehr effektive Durchmischung erreichbar.

Die Erfinder haben erkannt, daß man ein solches Schmelzmodul ideal als statischen Mischer einsetzen kann. Die Schmelze wird dem Modul im inhomogenen Zustand zugeführt und aufgrund der starken Konvektionsströmungen homogenisiert. Vorteil ist dabei, daß keinerlei Verschleiß bewegter Bauteile erfolgen kann und daß auch die Wandung des Moduls trotz der hohen Strömungsgeschwindigkeiten nicht korrodiert, da sie sich durch die Kühlung selbst schützt Je höher die Temperatur im Kern der Schmelze gewählt wird, um so effektiver ist die Durchmischung.

Um die Durchmischung noch weiter zu verbessern, kann zusätzlich im Modul mit Gas gebubbelt werden. Dabei hat sich Sauerstoff als Bubblinggas am besten bewährt, da es von der Schmelze sehr gut resorbiert werden kann und keinen negativen Einfluß auf die Blasigkeit der Schmelze hat.

Die Erfindung läßt sich in vielfältiger Weise anwenden. So kann die Vorrichtung gemäß der Erfindung genau an jener Stelle im Verfahrensablauf angeordnet sein, an welchem die eigentliche Homogenisierung stattfindet Die erfindungsgemäße Homogenisierung kann aber auch einer klassischen Homogenisierung mit Rührer vorgeschaltet sein. Schließlich kann die erfindungsgemäße Vorrichtung zum Homogenisieren auch gleichzeitig die Funktion eines Verteilers erfüllen, der den von einer Schmelzwanne kommenden Glasstrom aufteilt auf zwei oder mehrere Rinnen, die ihrerseits Teilströme einer Weiterbehandlung zuführen.

Wird eine zusätzliche Mischung durch Bubbling gefordert, so können gekühlte Bubblingdüsen in den Skull-Tiegelboden gesetzt werden. In der Regel können hierzu entweder einfache Platinrohre durch den Tiegelboden geführt werden. Sind die Schmelztemperaturen besonders hoch oder ist die Schmelze sehr aggressiv, so können die Bubblingdüsen doppelwandig ausgeführt werden und wassergekühlt werden. In diesem Fall kann statt Platin auch anderes metallisches Material eingesetzt werden. Zur elektrischen Entkopplung der Blasdüsen vom Skull-Tiegel ist es hilfreich einen keramischen Ring zwischen Tiegelboden und Blasdüse zu setzen.

## Patentansprüche

1. Verfahren zum Erzeugen einer homogenisierten Glasschmelze mit den folgenden Verfahrensschritten:
1.1 es wird in einer Schmelzwanne (1) eine Glasschmelze hergestellt;
1.2 die Glasschmelze wird geläutert;
1.3 die geläuterte Glasschmelze wird in einer Homogenisierungseinrichtung (2) homogenisiert;
1.4 als Homogenisierungseinrichtung (2) wird ein Skulttiegel verwendet, umfassend einen Kranz von wassergekühlten Metallrohren, die die Wandung der Homogenisierungseinrichtung (2) bilden;
1.5 in die in der Homogenisierungseinrichtung (2) befindliche Glasschmelze wird Hochfrequenzenergie eingekoppelt, so dass ein hoher Temperaturgradient zwischen der gekühlten Wandung und der heißen Schmelze hergestellt wird;
1.6 die Homogenisierung der Glasschmelze erfolgt allein durch die Konvektion, die in der Glasschmelze durch den Temperaturgradienten erzeugt wurde, und ohne Rührer oder sonstige bewegte Bauteile.

2. Verfahren nach Anspruch 1, **dadurch gekennzeichnet, dass** die Glasschmelze der Homogenisierungseinrichtung (2) oben zugeführt und oben wieder abgeführt wird.

3. Verfahren nach Anspruch 1 oder 2, **dadurch gekennzeichnet, dass** zwischen dem Zulauf der Schmelze zur Homogenisierungseinrichtung (2) und dem Auslauf der Schmelze aus der Homogenisierungseinrichtung (2) ein Brückenwall (2.1) vorgesehen ist.

4. Verfahren nach Anspruch 1, **dadurch gekennzeichnet, dass** die Glasschmelze der Homogenisierungseinheit (2) unten zugeführt und oben abgeführt wird.

5. Verfahren nach einem der Ansprüche 1 bis 4, **dadurch gekennzeichnet, dass** der Homogenisierungseinrichtung (2) Bubblinggas zugeführt wird.

## Claims

1. A method for producing a homogenized glass melt with the following method steps:
1.1 a glass melt is produced in a melting end (1);
1.2 the glass melt is refined;
1.3 the refined glass melt is homogenized in a homogenizing device (2);
1.4 a skull crucible is used as a homogenizing device (2), comprising a ring of water-cooled metal tubes which form the wall of the homogenizing device (2);
1.5 high-frequency energy is introduced into the glass melt situated in the homogenizing device (2), so that a high temperature gradient is produced between the cooled wall and the hot melt;
1.6 the homogenizing of the glass melt occurs alone by convection which was produced in the glass melt by the temperature gradient, and without any stirrers or other movable components.

2. A method according to claim 1, **characterized in that** the glass melt is supplied to the homogenizing device (2) from above and is removed again from above.

3. A method according to claim 1 or 2, **characterized in that** a bridge wall (2.1) is provided between the inlet of the melt to the homogenizing device (2) and the outlet of the melt from the homogenizing device (2).

4. A method according to claim 1, **characterized in that** the glass melt is supplied from below to the homogenizing device (2) and is removed from above.

5. A method according to one of the claims 1 to 4, **characterized in that** the homogenizing device (2) is supplied with bubbling gas.

## Revendications

1. Procédé pour la production d'une masse de verre en fusion homogénéisée, comprenant les étapes suivantes :
1.1 production d'une masse de verre en fusion dans un bac de fusion (1) ;
1.2 affinage de la masse de verre en fusion ;
1.3 homogénéisation de la masse de verre en fusion affinée dans un dispositif d'homogénéisation (2) ;
1.4 le dispositif d'homogénéisation (2) utilisé étant un creuset à croûte refroidie comprenant une couronne de tubes métalliques refroidis par eau qui forment la paroi du dispositif d'homogénéisation (2) ;
1.5 exposition de la masse de verre en fusion située dans le dispositif d'homogénéisation (2) à une énergie à haute fréquence de manière à créer un fort gradient de température entre la paroi refroidie et la matière en fusion chaude ;
1.6 l'homogénéisation de la masse de verre en fusion étant réalisée uniquement par la convection qui s'établit dans la masse de verre en fusion sous l'effet du gradient de température, sans agitateurs ni autres pièces en mouvement.

2. Procédé selon la revendication 1, **caractérisé en ce que** la masse de verre en fusion est amenée par le haut dans le dispositif d'homogénéisation (2) et évacuée par le haut.

3. Procédé selon la revendication 1 ou 2, **caractérisé en ce qu'**il est prévu entre l'entrée de la masse en fusion dans le dispositif d'homogénéisation (2) et la sortie de la masse en fusion hors du dispositif d'homogénéisation (2) une dame formant un pont (2.1).

4. Procédé selon la revendication 1, **caractérisé en ce que** la masse de verre en fusion est amenée par le bas dans le dispositif d'homogénéisation (2) et évacuée par le haut.

5. Procédé selon l'une quelconque des revendications 1 à 4, **caractérisé en ce que** du gaz de bouillonnement est amené dans le dispositif d'homogénéisation (2).
